(19) **Europäisches Patentamt**
**European Patent Office**
**Office européen des brevets**

(11) **EP 1 810 072 B1**

(12) **EUROPEAN PATENT SPECIFICATION**

(45) Date of publication and mention
of the grant of the patent:
**02.01.2019 Bulletin 2019/01**

(51) Int Cl.:
***G02F 1/1335*** *(2006.01)*

(21) Application number: **05821131.9**

(22) Date of filing: **11.11.2005**

(86) International application number:
**PCT/KR2005/003838**

(87) International publication number:
**WO 2006/052108 (18.05.2006 Gazette 2006/20)**

(54) **VERTICALLY ALIGNED LIQUID CRYSTAL DISPLAY**

VERTIKAL AUSGERICHTETES FLÜSSIGKRISTALLDISPLAY

AFFICHAGE A CRISTAUX LIQUIDES A ALIGNEMENT VERTICAL

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.11.2004 KR 20040092552**
**01.11.2005 KR 20050103813**

(43) Date of publication of application:
**25.07.2007 Bulletin 2007/30**

(73) Proprietor: **LG Chem, Ltd.**
**Seoul 07336 (KR)**

(72) Inventors:
• **JANG, Soo-Jin**
**Gangdong-gu,**
**Seoul 134-032 (KR)**
• **JEON, Byoung-Kun**
**Yuseong-gu,**
**Daejeon 305-340 (KR)**
• **BELYAEV, Sergey**
**Dajeon 305-340 (KR)**
• **CHANG, Jun-Won**
**Yuseong-gu,**
**Daejeon 305-340 (KR)**

(74) Representative: **Hoffmann Eitle**
**Patent- und Rechtsanwälte PartmbB**
**Arabellastraße 30**
**81925 München (DE)**

(56) References cited:
WO-A-03/054111          WO-A-2004/068225
WO-A1-01/20393          KR-A- 19990 004 389
KR-A- 20030 079 513     US-B2- 6 646 701

**EP 1 810 072 B1**

**Description**

**Technical Field**

The present invention relates to a vertically aligned liquid crystal display (hereinafter, referred as "VA-LCD"). More particularly, the present invention relates to a VA-LCD in which contrast ratio in the front viewing direction and tilt viewing directions is improved by using a viewing angle compensation film.

**Background Art**

There are two primary reasons of degradation of a viewing angle of VA-LCDs: first one is the viewing angle dependence of a perpendicular polarizer and second one is the viewing angle dependence of birefringence of a VA-LCD panel.

U.S. Patent No. 4,889,412 disclosed a VA-LCD using a -C plate compensation film as a viewing angle compensation film. The main function of the -C plate is to compensate the black state of a VA-LCD when a voltage is not applied. However, a VA-LCD with -C plate compensation film has a problem that leakage of light is caused at a tilt angle because the -C plate can not completely compensate the black state.

In order to solve the problem above, U. S. Patent No. 6,141,075 disclosed a VA-LCD with two compensation films, a -C plate and a +A plate compensation films. The device can compensate the black state on which a voltage is not applied more well compared to the device with the -C plate only, but the minimum contrast at a tilt viewing angle of 70 degrees is 20:1 at most. Accordingly, there is still need to improve contrast at both of the right angle and tilt angles.

WO 03/054111 discloses a vertically aligned liquid crystal display having liquid crystal cells in which liquid crystals with a negative dielectric anisotropy are filled and which is provided between a first polariser and a second polariser, whose absorption axes are perpendicular to each other. The display comprising a sheet of +A plate and sheet of -C plate, disposed between the first polariser and the liquid crystal cells, and a sheet of +A plate disposed between the second polariser and the liquid crystal cells.

WO 2004/068225 discloses a vertically aligned liquid crystal display in which the thickness retardation value of the C-plate is in the range of -500 to 180 nm at a wavelength of 550 nm. It further discloses the biaxial retardation film has an in-plane retardation value of 44 nm and a thickness retardation value of -119 nm at a wavelength of 550 nm.

Accordingly, the inventors of the present application reached this invention, feeling that a sheet +A plate and a sheet of -C plate have a limit in compensating the viewing angle.

**Disclosure of Invention**

**Technical Solution**

An aspect of the present invention is to solve at least the above problems and/or disadvantages and to provide at least the advantages described below. Accordingly, an aspect of the present invention is to provide a VA-LCD with high contrast at the front viewing direction and the declination viewing direction by minimizing leakage of light of a black state.

Additional aspects and/or advantages of the present invention will be set forth in part in the description which follows and, in part, will be obvious from the description or the practice of the invention.

According to the present invention, there is provided a vertically aligned liquid crystal display (VA-LCD) having liquid crystal cells (8) in which liquid crystals with a negative dielectric anisotropy are filled and which is provided between a first polarizer (1) and a second polarizer (3) whose absorption axes are perpendicular to each other, characterized in that:

> a sheet of +A plate (5) and a sheet of -C plate (7) are disposed between the first polarizer and the liquid crystal cells;
> a sheet of +A plate (9) is disposed between the second polarizer and the liquid crystal cells;
> an optical axis (6) of the +A plate near the first polarizer is perpendicular to the absorption axis of the first polarizer,
> an optical axis (10) of the +A plate near the second polarizer is parallel with the absorption axis of the second polarizer, wherein the optical axis (6) of the +A plate near the first polarizer is parallel with the optical axis of the +A plate near the second polarizer, and
> the in-plane retardation value of the +A plate (5) near the first polarizer (1) is in the range of 50nm to 300nm for a wavelength of 550nm.

**Brief Description of the Drawings**

The above and other objects, and features, and advantages of certain embodiments of the present invention will be more apparent from the following description taken in conjunction with the accompanying drawings, in which:

FIG. 1 is a view for explaining refraction index of a phase difference film;

FIG. 2 is a schematic view illustrating a VA-LCD with a compensation film according to a first embodiment of the present invention;

FIG. 3 is a schematic view illustrating a VA-LCD with a compensation film according to a second embodiment of the present invention;

FIG. 6 is a simulation result of contrast ratio of the VA-LCD according to the first embodiment of the present invention over tilt viewing angles of from 0 to 80 degrees when using white-light;

FIG. 7 is a simulation result of contrast ratio of the VA-LCD according to the second embodiment of the present invention over tilt viewing angles of from 0 to 80 degrees when using white-light;

FIG. 10 is a simulation result of contrast ratio of the VA-LCD in which a double axis retardation film is provided between a liquid crystal cell and a first polarizer but a +A plate is not provided between the liquid crystal cell and a second polarizer, over 0 to 80 degrees of tilt viewing angles at every azimuth angles when using a white-light;

FIG. 11 is a schematic view illustrating a VA-LCD according to a second comparative example; and

FIG. 12 is a simulation result of contrast ratio of the VA-LCD according to the second comparative example.

**Best Mode for Carrying Out the Invention**

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for conciseness.

Hereinafter, the present invention will be described in detail.

An LCD according to an embodiment of the present invention is a VA-LCD in which an optical axis of liquid crystals in liquid crystal cells is perpendicular to a polarizer, and includes a first polarizer 1, a liquid crystal cell 8 which includes two glass substrates and vertically aligned liquid crystals with a negative dielectric anisotropy ($\Delta\varepsilon < 0$), filled between the two glass substrates, and a second polarizer 3, where an absorption axis 2 of the first polarizer 1 is perpendicular to an absorption axis 4 of the second polarizer 3.

The VA-LCD can use a multidomain vertically aligned (MVA) mode since a ridge structure including a pair of electrodes is formed on the surface adjacent to a liquid crystal layer, or a vertically aligned (VA) mode utilizing a chiral additive.

A cell gap of the liquid crystal cell is 2.5 to 8$\mu$m.

The white state of a VA-LCD is based on the principle that incident light from a backlight in an orthogonal polarization state is linearly polarized by 0 degrees, the linearly polarized light passes a liquid crystal layer, and the emerging light passing out the liquid crystal layer is linearly polarized by 90 degrees. In order to change the 0-degree linear polarized light to the 90-degree linear polarized light, a retardation value of the liquid crystal layer should be 1/2 of a wavelength of the incident light.

According to the present invention, as a phase difference compensation film to compensate a viewing angle of a VA-LCD, a combination of a +A plate and a -C plate is provided between a first polarizer and a liquid crystal layer, and further a +A plate is disposed adjacent to a second polarizer, thereby implementing a wide viewing angle.

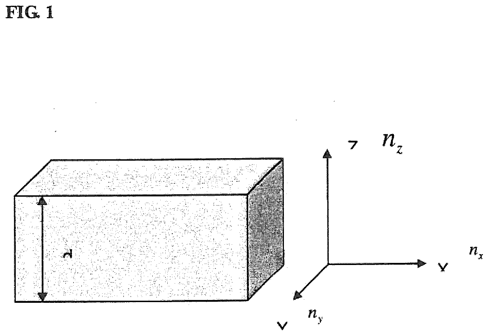

Referring to FIG. 1, a refraction index of a retardation film of used for compensating a viewing angle of a VA-LCD is as follows:

Given that when an X-axis refraction index is $n_x$ (13), a y-axis refraction index is $n_y$ (14), and a refraction index in the direction of thickness d is $n_z$ (15), among in-plane refraction indexes, a characteristic of a retardation film is determined by the refraction index.

A retardation film in which refraction indexes of two-axis among refraction indexes of three-axis are different is called a uni-axial retardation film, and a retardation film in which refraction indexes of three-axis are different is called a bi-axial retardation film. At this time, the retardation film is defined as follows:

(1) given that $n_x > n_y = n_z$, it is called a +A plate, and an in-plane retardation value, $R_{in}$ is defined by equation 1 using a difference between two refraction indexes and a film thickness.

[Equation 1]

$$R_{in} = d \times (n_x - n_y)$$

Here, d is a film thickness.

(2) given that $n_x = n_y > n_z$, it is called a -C plate, and its film thickness retardation value, $R_{th}$ is determined by equation 2 using the in-plane retardation value, the thickness retardation value and a film thickness.

$$[\text{Equation 2}]$$

$$R_{th} = d \times (n_z - n_y)$$

Here, d is a film thickness.

The +A plate has the thickness retardation value, which is nearly zero, and has a positive value of the in-plane retardation value. Among the +A plates used for compensating viewing angles, the +A plate (hereinafter referred as "A1 plate") being close to a first polarizer has the in-plane retardation value in the range of from 50 to 300 nm for a wavelength of 550nm, and the +A plate (hereinafter referred as A2 plate) being close to a second polarizer should have the in-plane retardation value in the range of from 30 to 600nm for a wavelength of 550nm.

Examples of the +A plate can include a polymer film and a UV setting liquid crystal film. The -C plate has the in-plane retardation value of nearly zero value, and the thickness retardation value of a negative value.

The thickness retardation value of the -C plate used for compensating viewing angles of a VA-LCD must be in a range of -500nm to 30nm for a wavelength of 550nm. Examples of the -C plate can include a polymer film and a UV setting liquid crystal film.

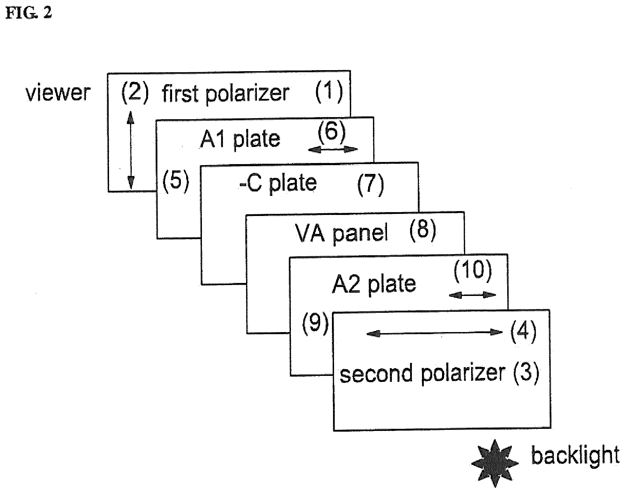

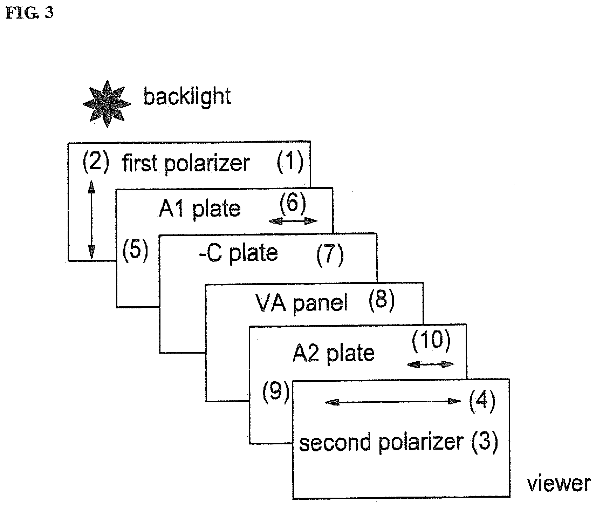

FIG. 2 and FIG. 3 illustrates the configuration of a VA-LCD including two viewing angle compensation films, a +A plate and a -C plate.

In designing a viewing angle compensation polarizer of a VA-LCD, an inner protective film can function as a retardation film by having a thickness retardation value of zero value or negative value. In cases that the inner protection film has and does not have the thickness retardation value, the designed values of the two plates, +A plate and -C plate, vary.

Examples of a material for the inner protective film include undrawn cyclo-olefin, undrawn triacetate cellulose, and undrawn polynorbornene.

Change of the designed values of two plates, the combination of +A plate and -C plate, is shown in Table 1.

As shown in FIG.2, an LCD device according to a first embodiment of the present invention is depicted where two plates, a +A plate (A1 plate) 5 and a -C plate 7, are disposed between a liquid crystal layer 8 and a first polarizer 1, and another +A plate (A2 plate) 9 is disposed between a second polarizer 3 and the liquid crystal layer 8.

The A1 plate 5 and the -C plate 7 are disposed between the liquid crystal layer 8 and the first polarizer 1, and -C plate 7 is disposed between the liquid crystal layer 8 and the A1 plate 5. At this time, an optical axis 6 of the A1 plate is arranged to be perpendicular to an absorption axis 2 of the first polarizer. An optical axis 10 of the A2 plate is arranged to be parallel with the absorption axis of the second polarizer. Accordingly, wider viewing angle compensation is possible.

At this time, a backlight is arranged to be close to the second polarizer 3 and the LCD viewing direction is close to the first polarizer 1.

In designing such compensation configuration, the A1 plate 5 disposed between the first polarizer 1 and the liquid crystal layer 8 has the in-plane retardation value in the range of from 50nm to 300nm for a wavelength of 550nm, and the -C plate 7 has the thickness retardation value in the range of from -500nm to -30nm for a wavelength of 550nm. Further, the A2 plate 9 (another +A plate) disposed between the second polarizer and the liquid crystal layer has the thickness retardation value in the range of from 30nm to 600nm for a wavelength of 550nm. Further, it is preferable that the A2 plate (another +A plate) 9 has the in-plane retardation value in the range of from 30nm to 600nm for a wavelength of 550nm.

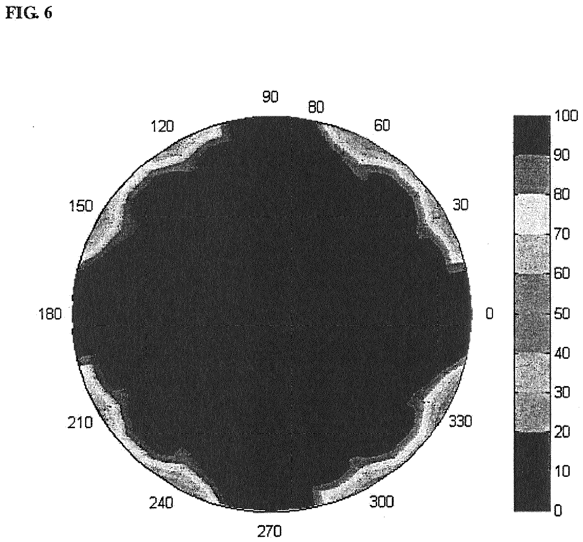

As described above, the simulation result of the LCD under the same conditions described above will be shown in FIG. 6 and Table 1.

[Table 1]

| Inner protective film of first polarizer | Retardation of VA panel | Retardation of -C plate (nm) | Retardation +A plate close to first polarizer (nm) | Retardation of +A1 plate close to second polarizer (nm) | Inner protective film of second polarizer | Minimum contrast in declination angle of 70 degrees |
|---|---|---|---|---|---|---|
| Isotropy COP | | -220 | 150 | 40 | Isotropy COP | 112 |
| | | -200 | 150 | 60 | $40\mu$m TAC | 117 |
| | | -200 | 200 | 90 | $80\mu$m TAC | 83 |
| $40\mu$m TAC | 332nm | -200 | 100 | 30 | Isotropy COP | 60 |
| | | -240 | 90 | 340 | $40\mu$m TAC | 86 |
| | | -170 | 140 | 50 | $80\mu$m TAC | 123 |
| $80\mu$m TAC | | -200 | 100 | 50 | Isotropy COP | 95 |
| | | -240 | 90 | 50 | $40\mu$m TAC | 96 |
| | | -180 | 120 | 80 | $80\mu$m TAC | 88 |

In Table 1, the inisotropy COP used for the inner protection film of the polarizer is cyclo-olefin polymer and has a thickness of $50\mu$m. On the other hand, the $40\mu$m TAC used for the inner protection film is made of triacetate cellulose and its retardation value is 28nm. In case of 80 $\mu$m TAC, it is made of cellulose and its retardation value is -56nm.

In Table 1, simulated contrast ratio (ratio of white state to black state) at 70 degrees of a VA-LCD is shown.

The contrast ratio is a factor to determine the sharpness of a screen, and the higher contrast ratio means the higher sharpness. 70 degrees is adopted as a tilt viewing angle because a characteristic of a VA-LCD is the worst at 70 degrees.

The minimum contrast ratio of a VA-LCD without a viewing angle compensation film is 10:1. However, the contrast ratio of the VA-LCD of the present invention is improved as shown in Table 1. The improvement of contrast ratio at the tilt viewing angle of 70 degrees means the improvement of contrast ratio at all the tilt viewing angles.

FIG. 3 illustrates the configuration of a VA-LCD with a compensation film according to a second embodiment of the present invention. In the VA-LCD according to the second embodiment of the present invention, an A1 plate 5 and a -C plate 7 are disposed between a first polarizer 1 and a VA liquid crystal cell 8, and the A1 plate 5 is disposed to be close to the first polarizer 1. An optical axis 6 of the A1 plate is arranged to be perpendicular to the absorption axis 2 of the first polarizer. At this time, a backlight is arranged to be close to the first polarizer 1 and a viewer is close to a second polarizer 3.

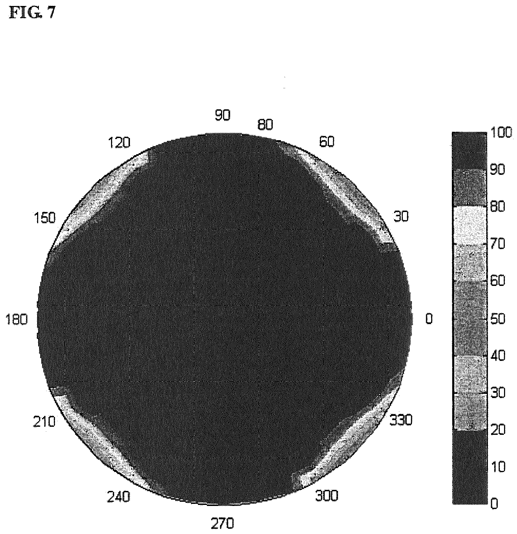

In such a configuration, a simulation result where designed values of a retardation film are applied is as shown in FIG. 7.

The present invention will be described in more detail with reference to embodiments below, but the present invention is not limited thereto.

**[Embodiment 1]**

Configuration of the first VA-LCD

Referring to FIG. 2, a VA-panel comprises a plurality of VA liquid crystal cells 8 having a cell gap of $2.9\mu$m where the liquid crystal cell is filled with liquid crystals having a pre-title angle of 90 degrees, a dielectric anisotropy $\Delta\varepsilon$ is -4.9, and a birefringence $\Delta$n is 0.099. The -C plate 7 is made of a liquid crystal film, and has a thickness retardation value $R_{th}$ of -240nm for a wavelength of 550nm. The A1 plate 5 being close to the first polarizer 1 has an in-plane retardation value $R_{in}$ of 90nm, and the A2 plate 9 being close to the second polarizer 3 has an in-plane retardation value $R_{in}$ of 340nm. The inner protective films of the first polarizer 1 and the second polarizer 3 are made of triacetate cellulose film with a thickness of $40\mu$m and a thickness retardation value of -28nm.

When using white light, contrast characteristics over 0 to 80 degrees with respect to all azimuth angles is shown in FIG. 6. In FIG. 6, the center of the circle means that a tilt viewing angle is 0 degree, and as a radius becomes larger, the tilt viewing angles become larger. In FIG. 6, values 20, 40, 60 and 80 marked on the radius designate the tilt viewing angles.

Values 0 to 360 degrees marked along the circumference of the circle designate azimuth angles. The second polarizer is arranged in the direction of 0 degrees, and the first polarizer is arranged in the direction of 90 degrees, and contrast characteristics for all the viewing directions (0 to 80 degrees in the declination angle, 0 to 360 degrees in the azimuth angles) are shown. A VA-LCD using only a polarizer exhibits the contrast below 10:1 at the tilt viewing angle of 70 degrees, but referring to FIG. 6, the VA_LCD exhibits the excellent contrast ratio greater than 86:1 at the tilt viewing angle of 70 degrees.

**[Embodiment 2]**

Configuration of second VA-LCD

Referring to FIG. 3, a VA-panel comprises a plurality of liquid crystal cells 8 filled with liquid crystals with a cell gap of 2.9$\mu$m, a pre-title angle of 90 degrees, a dielectric anisotropy $\Delta\varepsilon$ is -4.9, and a birefringence $\Delta$n is 0.099. The -C plate 7 is made of a liquid crystal film, has a thickness retardation value $R_{th}$ of -180nm for a wavelength of 550nm. The A1 plate 5 being close to the first polarizer 1 has an in-plane retardation value $R_{in}$ of 120nm, and the A2 plate 9 being close to the second polarizer 3 has an in-plane retardation value $R_{in}$ of 80nm. The inner protective films of the first polarizer 1 and the second polarizer 3 are made of TAC film with a thickness of 80$\mu$m and a thickness retardation value of -56nm.

When using white light, contrast characteristics over 0 to 80 degrees with respect to all azimuth angles are shown in FIG. 7. In FIG. 7, the contrast characteristic over 0 to 80 degrees with respect to all azimuth angles are excellent as the contrast ratio equal to or higher than 88:1 at the tilt viewing angle of 70 degrees.

**[Comparative example 1]**

A VA-panel used in this experiment comprises a plurality of liquid crystal cells 8 filled with liquid crystals with a cell gap of 2.9$\mu$m, a pre-tilt angle of 90 degrees, a dielectric anisotropy $\Delta\varepsilon$ is -4.9, and a birefringence $\Delta$n is 0.099.

The bi-axial retardation film 11 being close to the first polarizer 1 has an in-plane retardation value $R_{in}$ of 32nm and a thickness retardation value $R_{th}$ of -150nm. The inner protective films of the first polarizer 1 and the second polarizer 3 are made of triacetate cellulose and have a thickness of 80$\mu$m and a thickness retardation value of - 56nm.

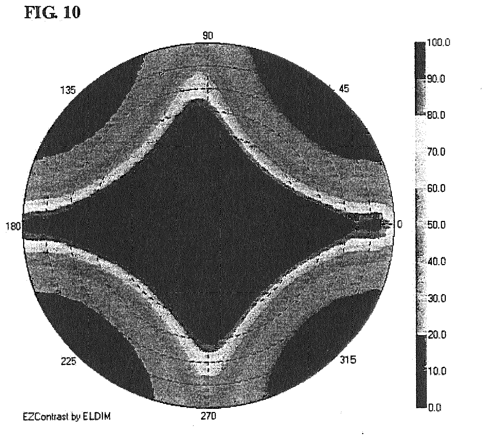

When using white light, contrast characteristics over 0 to 80 degrees with respect to all azimuth angles are shown in FIG. 10.

In FIG. 10, the contrast characteristics at the tilt viewing angle of 70 degrees are 10:1 at most, in the case that the +A plate is provided between the liquid crystal cell and the second polarizer.

**[Comparative example 2]**

A VA-panel used in this experiment comprises a plurality of liquid crystal cells 8 filled with liquid crystals with a cell gap of 2.9$\mu$m, a pre-title angle of 90 degrees, a dielectric anisotropy $\Delta\varepsilon$ is -4.9, and a birefringence $\Delta$n is 0.099. The -C plate 7 is made of a liquid crystal film, and has a thickness retardation value $R_{th}$ of -120nm for a wavelength of 550nm. The A1 plate 5 being close to the first polarizer 1 has an in-plane retardation value $R_{in}$ of 50nm, and the A2 plate 9 being close to the second polarizer 3 has an in-plane retardation value $R_{in}$ of 70nm. The inner protective films of the first polarizer 1 and the second polarizer 3 are made of a TAC film with a thickness of 80$\mu$m and a thickness retardation value of -56nm. The -C plate 7 is made of a liquid crystal film.

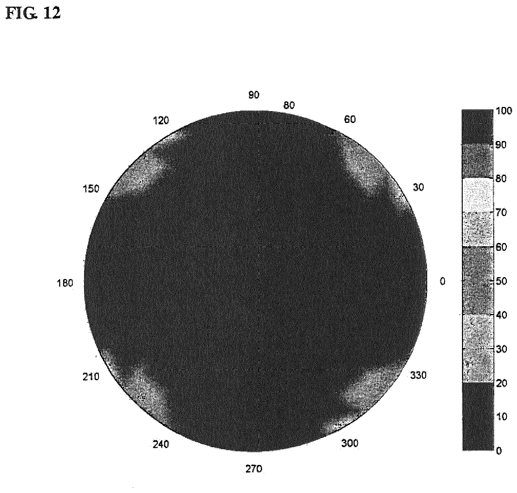

When using white light, contrast characteristics over 0 to 80 degrees with respect to all azimuth angles are shown in FIG. 12. In FIG. 12, the contrast characteristics at the tilt viewing angle of 70 degrees is 80:1 or more, thereby exhibiting the similar level of optical characteristics in FIG. 2 and FIG. 3.

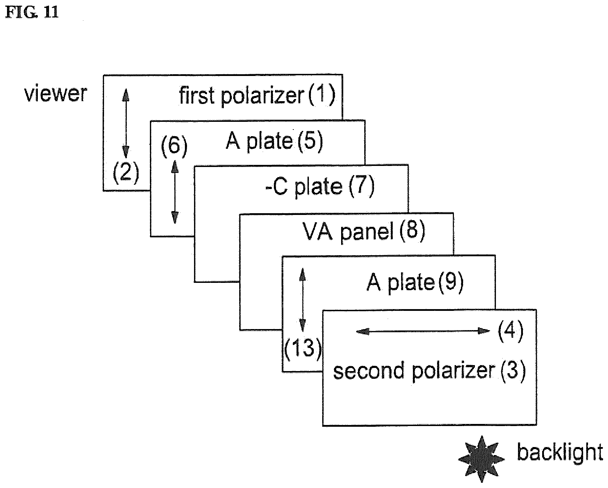

However, the configuration of FIG. 11 is a low effective configuration. In FIGs. 2 and 3, the optical axis of the A2 plate and the absorption axis of the second polarizer are parallel with each other. Since the optical axis of the A plate is a machine direction (MD), a roll to roll process is possible. On the other hand, in the configuration of FIG. 11, since the optical axis of the A2 plate is perpendicular to the absorption axis of the second polarizer being close to the A2 plate, there is inconvenience in process work to combine plates by cutting a single plate and turning the plates.

Accordingly, the configuration of FIG. 11 has not an advantage more than the configurations of FIG.2 and 3 in aspects of manufacturing process and cost.

**Industrial Applicability**

The VA-LCD according to the present invention has an advantage that viewing angle compensation effect is enhanced due to the arrangement of the viewing angle compensation films, thereby implementing the wider viewing angle characteristic. The VA-LCD according to the present invention exhibits a high contrast ratio at the right and tilt angles.

**Claims**

1. A vertically aligned liquid crystal display (VA-LCD) having liquid crystal cells (8) in which liquid crystals with a negative dielectric anisotropy are filled and which is provided between a first polarizer (1) and a second polarizer (3) whose absorption axes are perpendicular to each other, **characterized in that**:

   a sheet of +A plate (5) and a sheet of -C plate (7) are disposed between the first polarizer and the liquid crystal cells;
   a sheet of +A plate (9) is disposed between the second polarizer and the liquid crystal cells;
   an optical axis (6) of the +A plate near the first polarizer is perpendicular to the absorption axis of the first polarizer, an optical axis (10) of the +A plate near the second polarizer is parallel with the absorption axis of the second polarizer,
   wherein the optical axis (6) of the +A plate near the first polarizer is parallel with the optical axis of the +A plate near the second polarizer, and
   the in-plane retardation value of the +A plate (5) near the first polarizer (1) is in the range of 50nm to 300nm for a wavelength of 550nm.

2. The VA-LCD according to Claim 1, wherein the in-plane retardation value of the +A plate (9) near the second polarizer (3) is in the range of 30 to 600nm for a wavelength of 550nm.

3. The VA-LCD according to Claim 1, wherein the thickness retardation value of the -C plate (7) is in the range of -500nm to -30nm for a wavelength of 550nm.

4. The VA-LCD according to Claim 1, wherein the first polarizer (1) and the second polarizer (3) respectively have an inner protective film, and the inner protective films of the first polarizer and the second polarizer have zero or a negative value of thickness retardation.

5. The VA-LCD according to Claim 1, wherein the +A plate (9) comprises a polymer film or a UV setting liquid crystal film.

6. The VA-LCD according to Claim 1, wherein the -C plate (7) comprises a polymer film or a UV setting liquid crystal film.

7. The VA-LCD according to Claim 1, wherein the first polarizer (1) and the second polarizer (3) respectively have an inner protective film, and the inner protective films of the first polarizer and the second polarizer comprise undrawn cyclo-olefin, undrawn triacetate cellulose or undrawn polynorbonene.

8. The VA-LCD according to Claim 1, wherein the VA-LCD uses a multidomain vertically aligned (MVA) mode or a vertically aligned (VA) mode which utilizes a chiral additive, and the cell gap of the liquid crystal cells is 2.5 to 8μm.

**Patentansprüche**

1. Vertikal ausgerichtete Flüssigkristallanzeige (VA-LCD), die Flüssigkristallzellen (8) aufweist, in denen Flüssigkristalle mit einer negativen dielektrischen Anisotropie gefüllt sind, und die zwischen einem ersten Polarisator (1) und einem zweiten Polarisator (3) bereitgestellt wird, deren Absorptionsachsen senkrecht zueinander sind, **dadurch gekennzeichnet, dass**:

   ein Blatt einer +A-Platte (5) und ein Blatt einer -C-Platte (7) zwischen dem ersten Polarisator und den Flüssigkristallzellen bereitgestellt werden;
   ein Blatt einer +A-Platte (9) zwischen dem zweiten Polarisator und den Flüssigkristallzellen bereitgestellt wird;
   eine optische Achse (6) der +A-Platte in der Nähe des ersten Polarisators senkrecht zur Absorptionsachse des ersten Polarisators ist,
   eine optische Achse (10) der +A-Platte in der Nähe des zweiten Polarisators parallel zur Absorptionsachse des zweiten Polarisators ist,
   wobei die optische Achse (6) der +A-Platte in der Nähe des ersten Polarisators parallel zur optischen Achse der +A-Platte in der Nähe des zweiten Polarisators ist, und
   der In-Plane-Verzögerungswert der +A-Platte (5) in der Nähe des ersten Polarisators (1) im Bereich von 50 nm bis 300 nm für eine Wellenlänge von 550 nm liegt.

2. VA-LCD nach Anspruch 1, wobei der In-Plane-Verzögerungswert der +A-Platte (9) in der Nähe des zweiten Polarisators (3) im Bereich von 30 bis 600 nm für eine Wellenlänge von 550 nm liegt.

**3.** VA-LCD nach Anspruch 1, wobei der Dickenverzögerungswert der -C-Platte (7) im Bereich von -500 nm bis -30 nm für eine Wellenlänger von 550 nm liegt.

**4.** VA-LCD nach Anspruch 1, wobei der erste Polarisator (1) und der zweite Polarisator (3) jeweils einen inneren Schutzfilm aufweisen und die inneren Schutzfilme des ersten Polarisators und des zweiten Polarisators eine Dickenverzögerung von Null oder einen negativen Dickenverzögerungswert aufweisen.

**5.** VA-LCD nach Anspruch 1, wobei die +A-Platte (9) einen Polymerfilm oder einen UV angepassten Flüssigkristallfilm umfasst.

**6.** VA-LCD nach Anspruch 1, wobei die -C-Platte (7) einen Polymerfilm oder einen UV angepassten Flüssigkristallfilm umfasst.

**7.** VA-LCD nach Anspruch 1, wobei der erste Polarisator (1) und der zweite Polarisator (3) jeweils einen inneren Schutzfilm aufweisen und die inneren Schutzfilme des ersten Polarisators und des zweiten Polarisators ungezogenes Cycloolefin, ungezogene Triacetatcellulose oder ungezogenes Polynorbonen umfasst.

**8.** VA-LCD nach Anspruch 1, wobei die VA-LCD einen vertikal ausgerichteten Mehrfachbereich (MVA) Modus oder einen vertikal ausgerichteten (VA) Modus verwendet, der einen chiralen Zusatzstoff nutzt, und der Zellenabstand der Flüssigkristallzellen 2,5 bis 8 $\mu$m beträgt.

**Revendications**

**1.** Écran à cristaux liquides alignés verticalement (VA-LCD) ayant des cellules à cristaux liquides (8) dans lesquelles des cristaux liquides avec une anisotropie diélectrique négative sont remplis et qui est ménagé entre un premier polariseur (1) et un second polariseur (3) dont les axes d'absorption sont perpendiculaires l'un à l'autre, **caractérisé en ce que** :

une feuille de plaque +A (5) et une feuille de plaque -C (7) sont disposées entre le premier polariseur et les cellules à cristaux liquides ;
une feuille de plaque +A (9) est disposée entre le second polariseur et les cellules à cristaux liquides ;
un axe optique (6) de la plaque +A près du premier polariseur est perpendiculaire à l'axe d'absorption du premier polariseur,
un axe optique (10) de la plaque +A près du second polariseur est parallèle à l'axe d'absorption du second polariseur,
dans lequel l'axe optique (6) de la plaque +A près du premier polariseur est parallèle à l'axe optique de la plaque +A près du second polariseur, et
la valeur de retard en plan de la plaque +A (5) près du premier polariseur (1) est dans la plage de 50 nm à 300 nm pour une longueur d'onde de 550 nm.

**2.** VA-LCD selon la revendication 1, dans lequel la valeur de retard en plan de la plaque +A (9) près du second polariseur (3) est dans la plage de 30 à 600 nm pour une longueur d'onde de 550 nm.

**3.** VA-LCD selon la revendication 1, dans lequel la valeur de retard d'épaisseur de la plaque -C (7) est dans la plage de -500 nm à -30 nm pour une longueur d'onde de 550 nm.

**4.** VA-LCD selon la revendication 1, dans lequel le premier polariseur (1) et le second polariseur (3) ont respectivement un film de protection intérieur, et les films de protection intérieurs du premier polariseur et du second polariseur ont une valeur de retard d'épaisseur de zéro ou négative.

**5.** VA-LCD selon la revendication 1, dans lequel la plaque +A (9) comprend un film polymère ou un film à cristaux liquides durcissable aux UV.

**6.** VA-LCD selon la revendication 1, dans lequel la plaque -C (7) comprend un film polymère ou un film à cristaux liquides durcissable aux UV.

7. VA-LCD selon la revendication 1, dans lequel le premier polariseur (1) et le second polariseur (3) ont respectivement un film de protection interne, et les films de protection internes du premier polariseur et du second polariseur comprennent une cyclooléfine non-étirée, une cellulose de triacétate non-étirée ou un polynorbornène non-étiré.

8. VA-LCD selon la revendication 1, dans lequel le VA-LCD utilise un mode multidomaine aligné verticalement (MVA) ou un mode aligné verticalement (VA) qui utilise un additif chiral, et l'intervalle cellulaire des cellules à cristaux liquides est de 2,5 à 8 $\mu$m.

FIG. 1

FIG. 2

viewer | (2) first polarizer (1)

A1 plate (6)

(5) -C plate (7)

VA panel (8)

A2 plate (10)

(9) (4)

second polarizer (3)

backlight

FIG. 3

backlight

(2) first polarizer (1)

A1 plate (6)

(5) -C plate (7)

VA panel (8)

A2 plate (10)

(9) second polarizer (3) (4)

viewer

FIG. 6

FIG. 7

FIG. 10

EZContrast by ELDIM

FIG. 11

viewer

first polarizer (1)

(6)  A plate (5)

(2)

-C plate (7)

VA panel (8)

A plate (9)

(13)

(4)

second polarizer (3)

backlight

FIG. 12

**EP 1 810 072 B1**

**Patent documents cited in the description**

- US 4889412 A
- US 6141075 A
- WO 03054111 A
- WO 2004068225 A